# EUROPEAN PATENT APPLICATION

(11) **EP 2 343 461 A1**
(43) Date of publication of application: **13.07.2011**
(21) Application number: 09815966.8
(22) Date of filing: 01.06.2009
(51) Int. Cl.: F16C 25/08, F03D 11/00, F16C 19/16, F16C 19/26, F16C 19/36, F16C 33/58, F16C 35/077, F16H 57/02

(54) **SPEED-UP DEVICE FOR WIND-DRIVEN GENERATOR AND SUPPORT MECHANISM FOR ROTATING SHAFT**

(30) Priority: 24.09.2008 JP 2008244424
(71) Applicant: Mitsubishi Heavy Industries, Ltd., Tokyo 108-8215 (JP)
(72) Inventor: YOSHIDA, Takafumi, Nagasaki-shi Nagasaki 851-0392 (JP); SASAKI, Masashi, Nagasaki-shi Nagasaki 851-0392 (JP); MIYAKE, Hisao, Nagasaki-shi Nagasaki 850-8610 (JP)
(74) Representative: Intès, Didier Gérard André
(86) International application number: PCT/JP2009/059965
(87) International publication number: WO 2010/035549

(57) **Abstract**

It is an object to provide a gear box for a wind turbine generator and a rotation-shaft supporting structure which are capable of suppressing the occurrence of slips in a bearing with lower costs. A gear box (10) for a wind turbine generator which increases a speed of rotation of a wind turbine includes a gear (18) to which the rotation of the wind turbine is transmitted, and the gear (18) includes a rotation shaft (19) which is rotatably supported by a first bearing (20) and a second bearing (21). The first bearing (20) includes a pre-load applying member adapted to partially press the first bearing (20) from outside for increasing contact pressures between an outer ring (22) supported by a casing of the gear box (10), an inner ring (23) mounted on the rotation shaft (19), and rollers (24) provided between the outer ring (22) and the inner ring (23).

## Description

### Technical Field

The present invention relates to a gear box for a wind turbine generator and a supporting structure for a rotation shaft.

### Background Art

A wind turbine generator includes a gear box for transmitting a rotation of a wind turbine to an electric generator after increasing a speed of the rotation of the wind turbine.
As such a gear box, there has been used a planetary gear box, in order to transmit larger torques and also to attain a higher speed-increasing ratio. In the planetary gear box, roller bearings are frequently used as bearings for rotatably supporting speed-increasing gears, in order to support larger loads.

As the bearing for the speed-increasing gear in the last stage, among the bearings included in a gear box, in order to allow thermal expansion of the shaft of the speed-increasing gear, the shaft is supported at its one end by a bearing which exerts binding forces both in an axial direction and radial directions and, also, is supported at the other end thereof by a bearing which exerts binding forces only in the radial directions while exerting no binding force in the axial direction.

In recent years, along with increases in size of wind turbines in wind turbine generators, there have been raised concerns about occurrence of slips in the bearings in gear boxes, particularly in the bearings for the speed-increasing gears in the last stages therein under low-load condition. If slips occur in bearings, this will induce heat generation due to friction, thereby inducing damages and the like in the bearings.
When a wind turbine grows in size, the bearings therein should neeessarily have larger sizes corresponding to larger torques inputted thereto. Thus, when the output power of the wind turbine is small, the wind turbine exerts an insufficient load on the bearings, which induces a state where there are smaller frictional forces (contact pressures) between outer rings, inner rings and rollers therebetween in the bearings, thereby facilitating the occurrence of slips therein.

To cope therewith, as structures of such bearings, there have been suggested techniques for forming an outer ring to have an inner peripheral surface having an elliptical shape as a non-circular shape, in order to generate pre-load between the outer ring, the inner ring and the rollers. By employing these techniques, it is possible to effectively overcome the above problem (refer to Patent Citation 1 and 2, for example).

Patent Citation 1:
   The Publication of Japanese Patent No. 2961983
Patent Citation 2:
   Japanese Unexamined Patent Application, Publication No. 2001-304274

### Disclosure of Invention

However, in order to form a bearing including an outer ring with a non-circular-shaped inner peripheral surface, it is necessary to perform specific processing thereon with higher costs, since such a bearing is a component with a high degree of precision. As a matter of course, there has been generally a need for reduction of the costs for wind turbine generators. In view of this fact, the bearings having outer rings with non-circular-shaped inner peripheral surfaces cannot be easily employed.

The present invention has been made in view of the above circumstance and an object thereof is to provide a gear box for a wind turbine generator and a supporting structure for a rotation shaft which are capable of suppressing the occurrence of slips in bearings with lower costs.

In order to solve the above problem, the present invention adopts the following means.
That is, according to a first aspect of the present invention, there is provided a gear box for a wind turbine generator which increases a speed of rotation of a wind turbine, and the gear box includes step-up gears adapted such that the rotation of the wind turbine is transmitted thereto, wherein at least one of the step-up gears is rotatably supported at a rotation shaft thereof by at least two bearings, and at least one of the bearings includes a pre-load applying member adapted to partially press the bearing from outside for increasing a contact pressure between an outer ring supported by a casing of the gear box, an inner ring mounted on the rotation shaft, and a rolling element provided between the outer ring and the inner ring.

Since the pre-load applying member partially presses the bearing from outside for increasing the contact pressure between the outer ring supported by the casing of the gear box, the inner ring mounted on the rotation shaft and the rolling element provided between the outer ring and the inner ring, it is possible to apply pre-load to this portion. By applying pre-load in this manner, it is possible to maintain a contact pressure, even when the contact pressure is reduced in low-load conditions, for example. Thus, since the contact pressure between the outer ring and the inner ring and the rolling element can be maintained equal to or more than a certain value in both low-load conditions and high-load conditions, it is possible to suppress slips in the bearing. As a result, it is possible to prevent damages and the like due to slips of the bearing, even when the output power of the wind turbine is small.
Further, since the bearing is pressed from outside by the pre-load applying member, the bearing itself does not need to be subjected to specific processing which leads to high costs. This enables fabrication of the gear box with lower costs.

Further, in the above aspect, the pre-load applying member may be a sleeve which has a non-circular-shaped inner peripheral surface and is adapted such that the outer ring in the bearing is fitted therein.

When the sleeve is formed to have a shorter-diameter portion with a diameter smaller than the diameter of the outer ring, it is possible to press the outer ring in the bearing in radial directions, which can increase the contact pressures between the outer ring and the inner ring and the rolling element.
Further, in this case, such a non-circular shape includes an elliptical shape, a triangular shape and the like and indicates a shape having a shorter diameter and a longer diameter which are different from each other.

In the above structure, the sleeve may be constituted by two separated members which are separated in a circumferential direction.
Accordingly, it is possible to easily form a sleeve having a non-circular-shaped inner peripheral surface.

In the above aspect, the pre-load applying member may be a screw member adapted to be inserted and extracted in a radial direction of the outer ring in the bearing.

Accordingly, it is possible to press the outer ring in the bearing in the radial direction with the tip end portion of the screw member, thereby increasing the contact pressures between the outer ring and the inner ring and the rolling element.
Further, by inserting and extracting the screw member, it is possible to adjust the contact pressures.

In the above aspect, the pre-load applying member may include a pin adapted to be inserted and extracted in a radial direction of the outer ring in the bearing, and a driving source for driving the pin to insert and extract the pin.

Accordingly, it is possible to press the outer ring in the bearing in the radial direction with the tip end portion of the pin which is inserted and extracted by the driving source, thereby increasing the contact pressures between the outer ring and the inner ring and the rolling element.
Further, by inserting and extracting the pin, it is possible to adjust the contact pressures.

In the above structure, there may be further provided a control portion adapted to cause the driving source to insert and extract the pin according to the rotation speed of the wind turbine.

Thus, for example, when the output power of the wind turbine is small, it is possible to press the outer ring in the bearing in the radial direction with the tip end portion of the pin for increasing the contact pressures between the outer ring and the inner ring and the rolling element. When the wind turbine is in a rated operation condition, it is possible to retract the pin from the outer ring in the bearing, thereby reducing the pressing force.

In the above aspect, the rotation shaft may be provided with a tapered portion having a gradually increasing outer diameter, the bearing may be provided by fitting the inner ring to the tapered portion, and a pressing screw for pressing the bearing in a direction of the increase of the outer diameter of the tapered portion may be provided as the pre-load applying member.

By pressing the bearing, with the pressing screw, in the direction of the increase of the outer diameter of the tapered portion for deforming and enlarging the inner ring, it is possible to increase the contact pressures between the outer ring and the inner ring and the rolling element.

In the above aspect, the rolling element may have a hollow circular-cylindrical shape.
Further, in the above aspect, the rolling element may be made of ceramic.

Accordingly, it is possible to reduce the weight of the rolling element, which can reduce the rolling resistance of the rolling element. This can effectively suppress slips of the rolling element, even when the pre-load applying member does not apply large pre-load to the rolling element.

In the above aspect, the bearing may be adapted to bind the rotation shaft in radial directions and to allow the rotation shaft to be displaced in an axial direction.

Thus, a circular-cylindrical roller bearing is preferably used as the bearing, but this tends to induce slips. Therefore, it is also possible to employ a tapered roller bearing or a ball bearing, such that the rear surface thereof is provided movably and slidably in the axial direction of the rotation shaft through rollers or balls.

Further, according to a second aspect of the present invention, there is provided a rotation-shaft supporting structure including at least two bearings adapted to rotatably support a rotation shaft, wherein at least one of the bearings includes a pre-load applying member adapted to partially press the bearing from outside for increasing a contact pressure between an outer ring in the bearing, an inner ring mounted on the rotation shaft, and a rolling element provided between the outer ring and the inner ring.

Since the pre-load applying member partially presses the bearing from outside for increasing the contact pressure between the outer ring, the inner ring mounted on the rotation shaft and the rolling element provided between the outer ring and the inner ring, it is possible to apply pre-load to this portion. By applying pre-load in this manner, it is possible to maintain a contact pressure, even when the contact pressure is reduced in low-load conditions, for example. Thus, since the contact pressure between the outer ring and the inner ring and the rolling element can be maintained equal to or more than a certain value in both low-load conditions and high-load conditions, it is possible to suppress slips in the bearing.
Further, since the bearing is pressed from outside by the pre-load applying member, the bearing itself does not need to be subjected to specific processing which leads to high costs. This enables fabrication of the gear box with lower costs.

According to the present invention, it is possible to suppress slips of the bearing by pressing the bearing from outside, with the pre-load applying member, for increasing the contact pressure between the outer ring supported by the casing of the gear box, the inner ring mounted on the rotation shaft and the rolling element provided between the outer ring and the inner ring. As a result, it is possible to prevent damages and the like due to slips of the bearing, even when the output power of the wind turbine is small.
Further, since the bearing is pressed from outside, the bearing itself does not need to be subjected to specific processing. Therefore, the above effects can be obtained with lower costs, in comparison with cases of employing a non-circular shaped outer ring in the bearing.

### Brief Description of Drawings

[FIG. 1] A block diagram illustrating a gear box for a wind turbine generator according to a first embodiment of the present invention.
[Fig. 2] A partial longitudinal cross-sectional view illustrating, in an enlarging manner, a supporting structure for an output shaft in the last stage in the gear box in Fig. 1.
[Fig. 3] A lateral cross-sectional view illustrating a pre-load applying member according to the first embodiment of the present invention.
[Fig. 4] A lateral cross-sectional view illustrating another embodiment of the pre-load applying member according to the present embodiment.
[Fig. 5] A lateral cross-sectional view illustrating yet another embodiment of the pre-load applying member according to the present embodiment.
[Fig. 6] A lateral cross-sectional view illustrating a pre-load applying member according to a second embodiment of the present invention.
[Fig. 7] A lateral cross-sectional view illustrating another embodiment of the pre-load applying member according to the present embodiment.
[Fig. 8] A lateral cross-sectional view illustrating a pre-load applying member according to a third embodiment of the present invention.
[Fig. 9] A lateral cross-sectional view illustrating another embodiment of the pre-load applying member according to the present embodiment.
[Fig. 10] A lateral cross-sectional view illustrating a pre-load applying member according to a fourth embodiment of the present invention.
[Fig. 11] A perspective view illustrating a hollow roller.
[Fig. 12] A longitudinal cross-sectional view illustrating an example of a lubrication system for a bearing according to the present embodiment.

### Explanation of Reference:

10: Gear box
10a: Casing
11: Input shaft
18: Gear
19: Output shaft (rotation shaft)
20: First bearing (bearing)
21: Second bearing (bearing)
22 and 29: Outer ring
23 and 27: Inner ring
24 and 28: Roller (rolling element)
30: Sleeve
30a: Inside surface
30A and 30B: Sleeve segment (separated member)
40: Sleeve
41: Pre-load applying member
41a: Tip end portion
42: Screw member
43: Female thread
44: Pin
45: Guide hole
50: Roller bearing
54: Sleeve
55: Ball
56: Spring member
57: Pre-load plate
60: Ball bearing
61: Ball (rolling element)
65: Roller
70: Tapered portion
71: Inner ring
73: Nut (pressing screw)
80: Roller (rolling element)
81: Through hole

### Best Mode for Carrying Out the Invention

Hereinafter, embodiments of the present invention will be described with reference to the drawings.

### (First Embodiment)

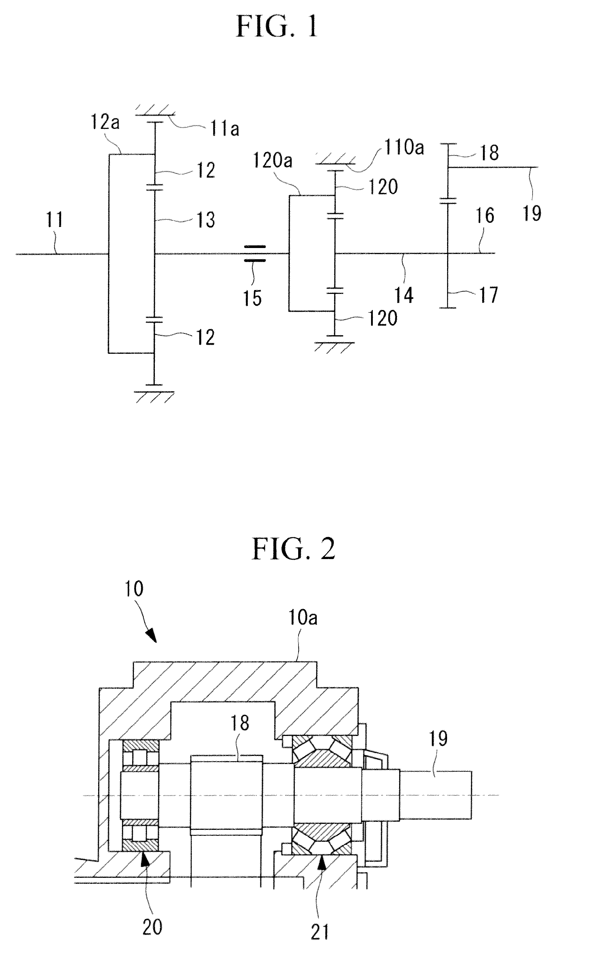

A gear box 10 according to a first embodiment of the present invention will be described with reference to Figs. 1 to 3.
Fig. 1 is a block diagram illustrating the basic structure of the gear box 10 for a wind turbine generator according to the present embodiment. As illustrated in Fig. 1, the gear box 10 includes an input shaft 11 coupled to a wind turbine which is not illustrated, a planetary pin 12a integrally coupled to the input shaft 11, a plurality of planetary gears 12 which are provided in the circumferential direction in a ring gear 11a and adapted to rotate through the mesh with the ring gear 11a, a sun gear 13 to which the rotations of the planetary gears 12 are transmitted after being increased in speed, a subsequent planetary pin 120a integrally coupled to the sun gear 13 through a coupling 15, a plurality of planetary gears 120 which are provided in the circumferential direction in a ring gear 110a and adapted to rotate through the mesh with the ring gear 110a, a sun shaft 14 to which the rotations of the planetary gears 120 are transmitted after being increased in speed, a parallel shaft 16 coupled to the sun shaft 14, and an output shaft (rotation shaft) 19 to which the rotation of the parallel shaft 16 is transmitted through gears (step-up gears) 17 and 18.

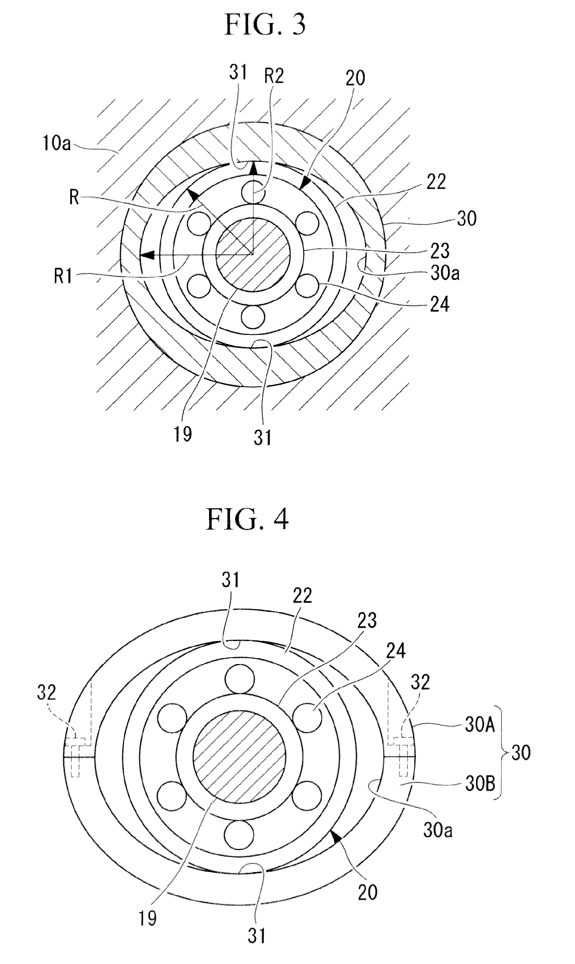

Fig. 2 is an enlarged longitudinal cross-sectional view illustrating the structure of the portion of the gear 18 in Fig. 1, in an enlarging manner. Fig. 3 is a lateral cross-sectional view of the same portion.
As illustrated in Fig. 2, the gear 18 in the last stage is provided integrally with the output shaft 19. The output shaft 19 is rotatably held in a casing 10a, through a first bearing (bearing) 20 which supports the output shaft 19 in the radial directions, and a second bearing (bearing) 21 which supports the output shaft 19 in the radial directions and the axial direction.

As illustrated in Fig. 3, the first bearing 20 is provided in the casing 10a with a sleeve 30 interposed therebetween.
The sleeve 30 is formed to have an inside surface 30a having a non-circular shape, such as an elliptical shape or an oval shape, which has a longer diameter R1 and a shorter diameter R2 which are different from each other. The first bearing 20 has an outer ring 22 which is supported by the inside surface 30a of the sleeve (pre-load applying member) 30. In this case, the inside surface 30a is preferably adapted to have respective optimal values which are determined by the bearing size, the bearing load and the bearing rotation speed, for example, with respect to an outer diameter R of the outer ring 22.
Further, the outer ring 22 in the first bearing 20 is fitted to the Sleeve 30 through shrink fit.

As described above, with the gear box 10 for the wind turbine generator according to the present embodiment, it is possible to provide effects and advantages as fellows.
The outer ring 22 in the first bearing 20 is subjected to compressive loads in radial directions from the portions 31 and 31 of the sleeve 30 which have the shorter diameter R2. These compressive loads increase the contact pressures between the outer ring 22 and an inner ring 23 and rollers (rolling elements) 24 therebetween. That is, the sleeve 30 applies pre-load to the first bearing 20, thereby suppressing occurrences of slips of the rollers 24. As a result, it is possible to prevent damages and the like due to slips in the first bearing 20, when the output power of the wind turbine is small.
Further, the above structure can be realized by processing the sleeve 30. Accordingly, it is possible to provide the above effects with lower costs, in comparison with a case of employing a non-circular-shaped outer ring 22 in the first bearing 20.

### (Modification of First Embodiment)

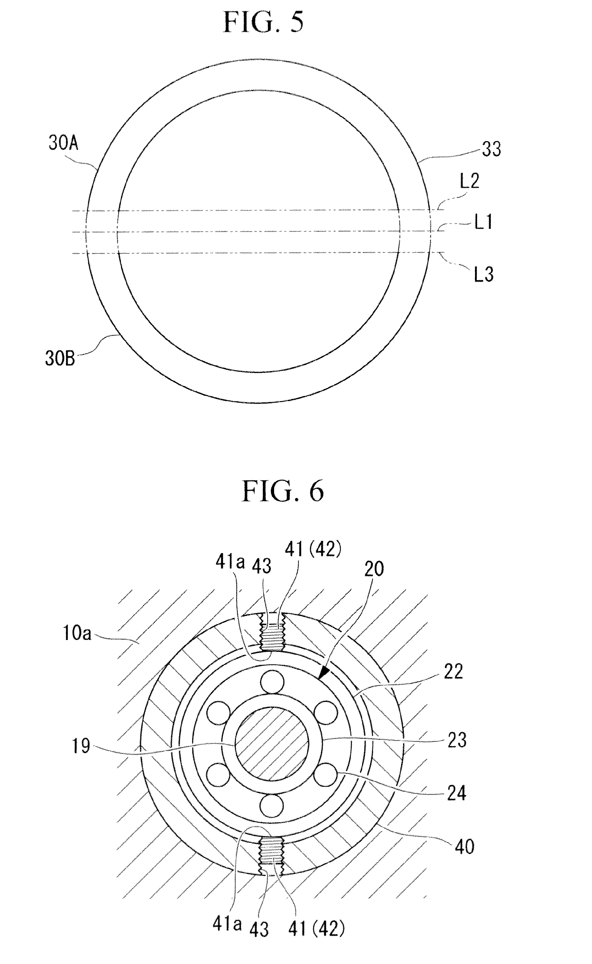

Further, while, in the present embodiment, the sleeve 30 having the elliptical-shaped inside surface 30a is formed to have an integral structure, the sleeve 30 is not limited thereto.
For example, as illustrated in Fig. 4, a sleeve 30 having a non-circular-shaped inside surface 30a can be also formed by integrally coupling semi-circular-shaped sleeve segments (separated members) 30A and 30B to each other, through bolts 32 and the like.
In this case, as illustrated in Fig. 5, the sleeve segments 30A and 30B can be formed by cutting away or removing, in parallel, portions of a circular-shaped member 33 at positions L2 and L3 offset by a certain dimension from a line L1 separating the member 33 into two parts.
By combining these two sleeve segments 30A and 30B as illustrated in Fig. 4, it is possible to fabricate a non-circular-shaped sleeve 30 with ease.

### (Second Embodiment)

Next, a gear box 10 according to a second embodiment of the present invention will be described with reference to Fig. 6.
The present embodiment is different from the first embodiment in the structure of the pre-load applying member and, therefore, will be described mainly with respect to the different portions, and descriptions of the portions same as those of the first embodiment will not be repeated.
Further, the members same as those of the first embodiment will be designated by the same reference numerals.

Fig. 6 is a lateral cross-sectional view illustrating the general structure of the pre-load applying member according to the present embodiment.
A first bearing 20 is provided in a casing 10a with a sleeve 40 interposed therebetween.
The sleeve 40 is provided with pre-load applying members 41 which apply compressive loads in radial directions to an outer ring 22 in the first bearing 20. In this case, it is necessary to provide at least a single pre-load applying member 41, but it is preferable to provide two pre-load applying members 41 at positions opposing to each other with the center of the outer ring 22 sandwiched therebetween.
Further, it is also possible to provide three or more pre-load applying members 41. In this case, the pre-load applying members 41 are preferably provided in the periphery of sleeve 40 at substantially equal intervals.

As the pre-load applying members 41, it is possible to employ screw members 41 having thread grooves formed in their outer peripheral portions, for example. Further, female threads 43 are formed in the sleeve 40, so that the screw member 42 can be screwed into the female threads 43, which enables inserting and extracting the screw members 42 in radial directions of the outer ring 22 in the first bearing 20. Further, by pushing the outer ring 22 with the tip end portions 41a of the pre-load applying members 41 (the screw members 42), it is possible to apply radial compressive loads to the outer ring 22 in the first bearing 20.

As described above, with the gear box 10 for the wind turbine generator according to the present embodiment, it is possible to provide and advantages as follows.
Since the pre-load applying members 41 apply the compressive loads thereto, it is possible to increase the contact pressures between the outer ring 22 and an inner ring 23 and rollers (rolling elements) 24 therebetween, thereby suppressing the occurrence of slips of roller 24. As a result thereof, it is possible to prevent damages and the like due to slips in the first bearing 20, when the output power of the wind turbine is small. Further, this structure can be realized by processing the sleeve 30. Accordingly, it is possible to provide the above effects, with lower costs, in comparison with cases of employing a non-circular-shaped outer ring 22 in the first bearing 20.

### (Modification of Second Embodiment)

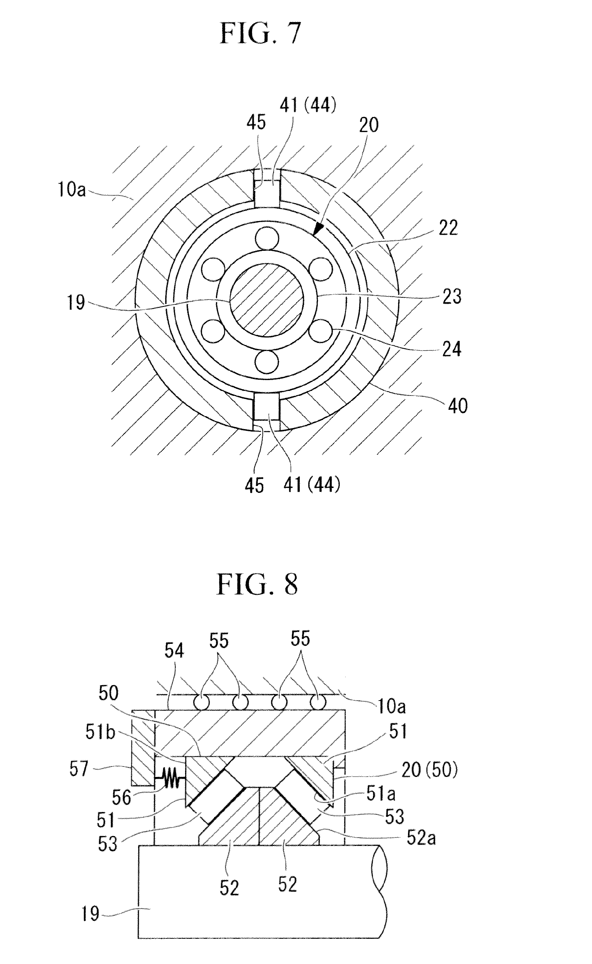

Further, as illustrated in Fig. 7, the pre-load applying members 41 can be constituted by pins 44, guide holes 45 can be formed in the sleeve 40 for enabling inserting and extracting the pins 44 thereinto and therefrom in radial directions of the outer ring 22 in the first bearing 20, and the pre-load applying members 41 can be inserted and extracted thereinto and therefrom in the above directions, with an insertion/extraction driving source (driving source), such as a hydraulic cylinder, which is not illustrated.
In this case, it is also possible to provide the same effects as those provided by the pre-load applying members 41 constituted by screw members.

Furthermore, it is possible to control the operations of the insertion/extraction driving source, with a control device which is not illustrated, in order to automatically insert and extract the pre-load applying members 41 thereinto and therefrom, according to the load condition of the wind turbine. In this case, when the output power of the wind turbine is small, radial compressive loads are applied to the outer ring 22 by the pre-load applying members 41 in order to suppress slips in the first bearing 20. When the output power of the wind turbine is large (such as in a rated operation condition), the pre-load applying members 41 are retracted, in order to reduce or eliminate the radial compressive loads applied to the outer ring 22. In this manner, it is possible to apply compressive loads to the first bearing 20 only in less slip-prone states, but it is possible to apply reduced compressive loads thereto for reducing the rolling resistance in less slip-prone states.

### (Third Embodiment)

Next, a gear box 10 according to a third embodiment of the present invention will be described with reference to Fig. 8.
The present embodiment is different from the first embodiment, in the structures of the pre-load applying members and the supporting structure for the rotation shaft 19 and, therefore, will be described mainly with respect to these different portions, and descriptions of the portions same as those of the first embodiment will not be repeated.
Further, the members same as those of the first embodiment will be designated by the same reference numerals.

Fig. 8 is a lateral cross-sectional view illustrating the general structure of the rotation shaft, according to the present embodiment.
In the present embodiment, as illustrated in Fig. 8, a first bearing 20 is constituted by roller bearings 50 capable of exerting binding forces in the radial directions and the axial direction, similarly to a second bearing 21, and there are provided, in a staggered manner, two roller bearings 50 each having an outer ring 51, an inner ring 52 and a plurality of tapered rollers 53 interposed between a tapered inner peripheral surface 51a of the outer ring 51 and a tapered outer peripheral surface 52a of the inner ring 52.

The first bearing 20 is required to exert binding forces only in the radial directions, while allowing thermal expansion of the output shaft 19 in the axial direction. Accordingly, the first bearing 20 has the following structure.
That is, the two roller bearings 50 are placed in a circular-cylindrical sleeve 54, and there are provided a plurality of balls 55 which enable the sleeve 54 to move in the direction of the axis of the output shaft 19, between the sleeve 54 and a casing 10a. This enables the first bearing 20 itself to move in the direction of the axis of the output shaft 19, thereby allowing thermal expansion of the output shaft 19.

Further, in order to suppress the occurrence of slips in the first bearing 20, pre-load is applied to the first bearing 20 with a spring member 56, such as a coil spring, which is being compressed. In order to attain this, the sleeve 54 is provided with a pre-load plate 57 which is opposed to a side surface 51b of an outer ring 51. Further, the spring member 56 being compressed is provided, between the pre-load plate 57 and the side surface 51b of the outer ring 51.

In this manner, the spring member 56 exerts a pressing force in the axial direction of the output shaft 19, on the side 51b of the outer ring 51. This causes the outer ring 51 to exert a load on the rollers 53 which are obliquely placed in two rows, thereby increasing the contact pressures between the outer rings 51 and the inner rings 52 and the rollers 53 therebetween. That is, the spring member 56 exerts pre-load on the first bearing 20, thereby suppressing the occurrence of slips of the rollers 53. As a result thereof, it is possible to prevent damages and the like due to slips in the first bearing 20, when the output power of the wind turbine is small.
Further, with this structure, it is possible to exert pre-load on the outer rings 51 in the first bearing 20 with the spring member 56, without forming the first bearing 20 itself to have a non-circular shape or the like. This can provide the same effects with lower costs, in comparison with the structures described in the first and second embodiments.

### (Modification of Third Embodiment)

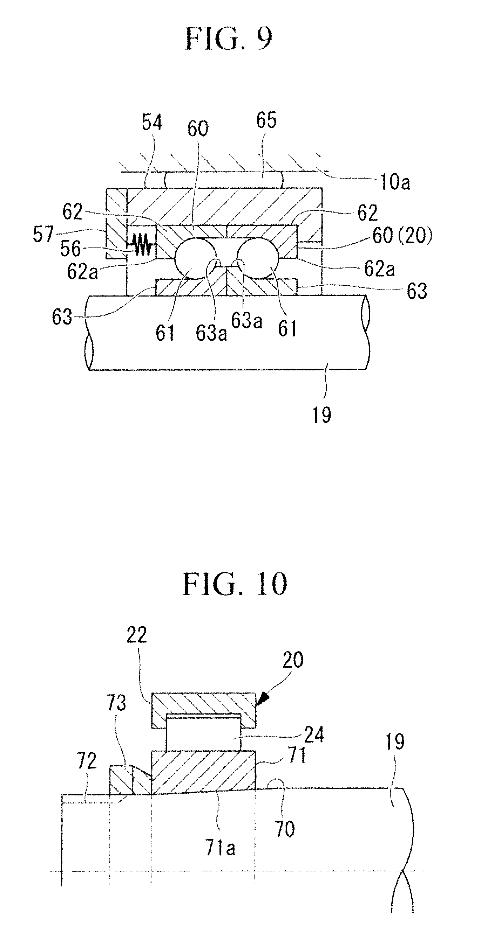

Further, the first bearing 20 is not limited to the roller bearings 50 illustrated in Fig. 8, and as illustrated in Fig. 9, it is also possible to employ ball bearings 60 including balls (rolling elements) 61 as the first bearing 20. Further, the same structures as those of the third embodiment will be designated by the same reference numerals and will not be described.
In this case, a plurality of balls 61 having a contact angle are interposed in each of the angular ball bearings 60. Two angular ball bearings 60 are combined in a staggered manner to constitute the first bearing 20. This enables the first bearing 20 to exert binding forces not only in the radial directions but also in the axial direction.

In order to suppress the occurrence of slips in the first bearing 20, pre-load is applied to the first bearing 20 with a spring member 56 such as a coil spring which is being compressed, similarly to the structure illustrated in Fig. 7.
Further, in order to structure the first bearing 20 such that it exerts binding forces only in the radial directions while allowing thermal expansion of the output shaft 19 in the axial direction, it is also possible to employ circular-cylindrical rollers 65, instead of balls 55. The rollers 65 have axes parallel to the output shaft 19, and a plurality of such rollers 65 are placed with intervals interposed therebetween in the circumferential direction, between the sleeve 54 and the casing 10a. These rollers 65 come into line-to-line contact with the sleeve 54 in the axial direction of the output shaft 19. Therefore, as compared to cases of surface-to-surface contact, the rollers 65 can easily move in the axial direction of the output shaft 19, thereby allowing thermal expansion of the output shat 19.

### (Fourth Embodiment)

Next, a gear box 10 according to a fourth embodiment of the present invention will be described with reference to Fig. 10.
The present embodiment is different from the first embodiment, in the structure of the pre-load applying member and, therefore, will be described mainly with respect to the different portion, and descriptions of the portions same as those of the first embodiment will not be repeated.
Further, the members same as those of the first embodiment will be designated by the same reference numerals.

Fig. 10 is a lateral cross-sectional view illustrating the general structure of the pre-load applying member, according to the present embodiment.
As illustrated in Fig. 10, in the present embodiment, the outer peripheral surface of the output shaft 19 forms a tapered portion 70 having a diameter gradually increased from its end portion, at its portion carrying a first bearing 20.
On the other hand, in the first bearing 20, the inner peripheral surface 71a of an inner ring 71 has a tapered shape conforming to the tapered portion 70.
Further, the output shaft 19 is formed with a spiral-shaped thread groove 72 in the outer peripheral surface of its end portion. A nut (pressing screw) 73 is screwed into the thread groove 72, so that the nut 73 fixes the first bearing 20 at a state where it is pressed from a smaller-diameter portion of the tapered portion 70 toward a larger-diameter portion thereof.

With this structure, by screwing the nut 73 into the thread groove 72, it is possible to slide the inner ring 71 in the first bearing 20 in the axial direction. Since the output shaft 19 has the tapered-shaped outer peripheral surface which is opposed to the inner peripheral surface of the inner ring 71, depending on the position thereof, the inner ring 71 elastically deforms in such a direction as to increase its diameter.

As described above, with the gear box 10 for a wind turbine generator according to the present embodiment, it is possible to provide effects and advantages as follows.
By changing the amount of screwing of the nut 73, it is possible to change the outer diameter of the inner ring 71, thereby applying pre-load to rollers 24 between the inner ring 71 and an outer ring 22. This pre-load increases the contact pressures between the outer ring 22 and the inner ring 71 and the rollers 24 therebetween, thereby suppressing the occurrence of slips of the rollers 24. As a result, it is possible to prevent damages and the like due to slips in the first bearing 20, when the output power of the wind turbine is small.
Further, since the outer diameter of the inner ring 71 is changed uniformly in the circumferential direction by the tapered portion 70, pre-load is uniformly applied to the rollers 24, and heat generation due to friction caused by rolling of the rollers 24 is also suppressed. Further, it is possible to easily perform fine adjustment of the amount of pre-load, by adjusting the amount of screwing of the nut 73. This enables adjusting the amount of pre-load to an amount which suppresses the occurrence of slips and heat generation.

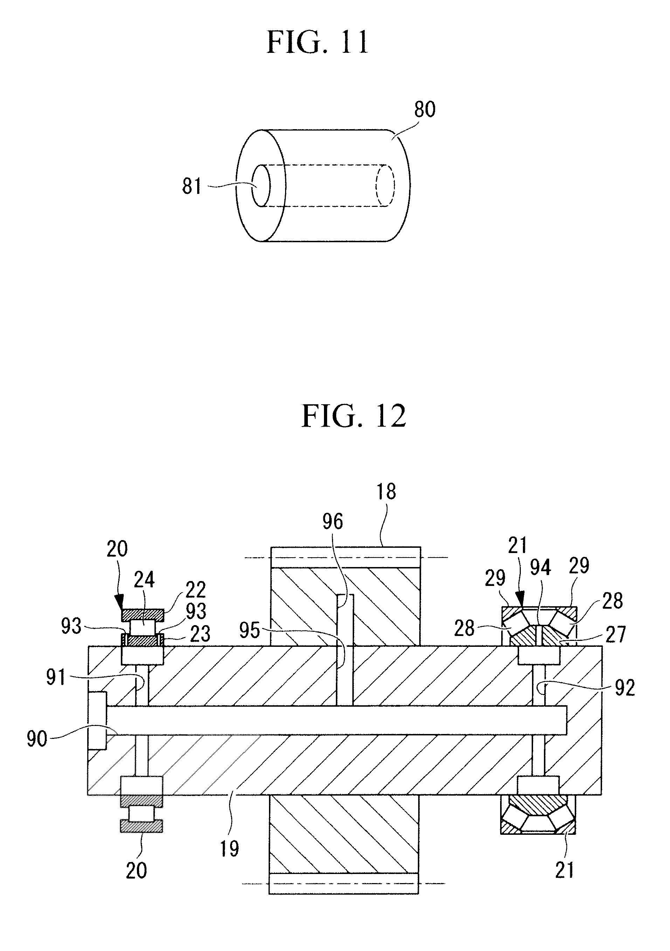

On the other hand, in the above embodiments, the rollers 24 placed between the outer ring 22 and the outer ring 23 in the first bearing 20 can be replaced with rollers (rolling elements) 80 each having a hollow circular-cylindrical shape with a through hole 81 formed at its center portion, instead of a common circular-cylindrical shape, as illustrated in Fig. 11.
Further, the rollers 24 and 80 can be made of ceramics, instead of common steels.
In this manner, it is possible to reduce the weights of the rollers 24 and 80, which can reduce the rolling resistance when the rollers 24 and 80 are rolled. This can effectively suppress the occurrence of slips in the first bearing 20, either when smaller pre-load is applied thereto or when the output power is lower.

Further, in the above embodiments, it is also possible to combine the following structures therewith.
That is, as illustrated in Fig. 12, the output shaft 19 is formed with an oil flow channel 90 extending in the direction of its center axis and, further, is formed with oil supply channels 91 and 92 extending from the oil flow channel 90 toward the inner ring 23 in the first bearing 20 and toward the inner ring 27 in the second bearing 21, respectively. Further, the oil flow channel 90 is supplied with oil, from an oil supply means which is not illustrated.

On the other hand, the inner ring 23 in the first bearing 20 and the inner ring 27 in the second bearing 21 are provided with communication flow channels 93 and 94 which communicates to the oil supply channels 91 and 92, respectively. In the second bearing 21 including rollers (rolling elements) 28 in two rows, the communication flow channel 94 is formed between the two rows of the rollers 28.
Accordingly, lubricant oil can be supplied to the rollers 24 and 28 at their sides near the inner ring 23 in the first bearing 20 and the inner ring 27 in the second bearing 21, through the oil flow channel 90, the oil supply channels 91 and 92, and the communication flow channels 93 and 94. This enables certainly lubricating the bearings, which are the first bearing 20 and the second bearing 21, thereby preventing damages and wear thereof, even in low-load conditions. Further, it is possible to cool, with the lubricant oil, the first bearing 20 and the second bearing 21, particularly the inner rings 23 and 27 therein, which can decrease the temperature difference between the outer rings 22 and 29 and the inner rings 23 and 27.

Further, in order to supply the lubricant oil to the gear surface of the gear 18, it is also possible to form oil supply channels 95 and 96, in the oil flow channel 90 in the output shaft 19. This enables lubricating and cooling the gear 18.

Further, while, in the above embodiments, the gear boxes 10 for the wind turbine generators have been described, the structures other than the gear boxes 10 are not restricted. Further, in the gear boxes 10, the structures other than the first bearing 20 and the second bearing 21 for supporting the output shaft 19 are not restricted and can have any structures.
Further, the structures described in the above embodiments can be similarly applied to portions other than the output shaft 19 in the gear box 10.
More specifically, the structures described in the above embodiments can be also employed as supporting structures for rotation shafts other than those of the gear boxes 10.

## Claims

1. A gear box for a wind turbine generator which increases a speed of rotation of a wind turbine, the gear box comprising:
step-up gears adapted such that the rotation of the wind turbine is transmitted thereto, at least one of the step-up gears being rotatably supported at a rotation shaft thereof by at least two bearings; and
at least one of the bearings includes a pre-load applying member adapted to partially press the bearing from outside for increasing a contact pressure between an outer ring supported by a casing of the gear box, an inner ring mounted on the rotation shaft, and a rolling element provided between the outer ring and the inner ring.

2. The gear box for a wind turbine generator according to claim 1, wherein the pre-load applying member is a sleeve which has a non-circular-shaped inside surface and is adapted such that the outer ring in the bearing is fitted therein.

3. The gear box for a wind turbine generator according to claim 2, wherein the sleeve includes two separated members which are separated in a circumferential direction.

4. The gear box for a wind turbine generator according to claim 1, wherein the pre-load applying member is a screw member adapted to be inserted and extracted in a radial direction of the outer ring in the bearing.

5. The gear box for a wind turbine generator according to claim 1, wherein
the pre-load applying member includes a pin adapted to be inserted and extracted in a radial direction of the outer ring in the bearing, and a driving source for driving the pin to insert and extract the pin.

6. The gear box for a wind turbine generator according to claim 5, further comprising
a control portion adapted to cause the driving source to insert and extract the pin according to the rotation speed of the wind turbine.

7. The geox for a wind turbine generator according to clam 1, wherein
the rotation shaft is provided with a tapered portion having a gradually increasing outer diameter,
the bearing is provided by fitting the inner ring to the tapered portion, and
a pressing screw for pressing the bearing in a direction of the increase of the outer diameter of the tapered portion is provided as the pre-load applying member.

8. The gear box for a wind turbine generator according to claim 1, wherein
the rolling element has a hollow circular-cylindrical shape.

9. The gear box for a wind turbine generator according to claim 1, wherein
the rolling element is made of ceramic.

10. The gear box for a wind turbine generator according to claim 1, wherein
the bearing is adapted to bind the rotation shaft in radial directions and to allow the rotation shaft to be displaced in an axial direction.

11. The gear box for a wind turbine generator according to claim 10, wherein
the bearing is provided slidably in the axial direction of the rotation shaft.

12. A rotation-shaft supporting structure comprising:
at least two bearings adapted to rotatably support a rotation shaft, wherein
at least one of the bearings includes a pre-load applying member adapted to partially press the bearing from outside for increasing a contact pressure between an outer ring in the bearing, an inner ring mounted on the rotation shaft, and a rolling element provided between the outer ring and the inner ring.
